# EUROPÄISCHE PATENTANMELDUNG

(11) **EP 3 178 303 A1**
(43) Veröffentlichungstag der Anmeldung: **14.06.2017**
(21) Anmeldenummer: 16002594.6
(22) Anmeldetag: 06.12.2016
(51) Int. Cl.: A01C 23/04, F16L 17/10, F16L 27/04, F16L 37/06

(54) **GESICHERTE ANDOCKELEMENTE**

(30) Priorität: 11.12.2015 DE 202015008490 U
(71) Anmelder: Zunhammer, Sebastian, 83301 Traunreut (DE)
(72) Erfinder: Zunhammer, Sebastian, 83301 Traunreut (DE)
(74) Vertreter: Einsiedler, Johannes

(57) **Zusammenfassung**

Die Erfindung bezieht sich auf eine Umfüll-Vorrichtung für fließfähige Medien, insbesondere für Gülle G, bei der die Andockelemehte (6, 8) aus mehreren Elementen bestehen, von denen eines trichterförmig ausgebildet und zur Erzielung einer gasdichten Verbindung zwischen den Andockelementen (6, 8) aus gummielastischem Werkstoff geformt ist, und bei der das jeweils andere Andockelement (8) diesem trichterförmigen Andockelement (6) nach Art einer Sphäre angepasst ist, so dass eine Innenkegel/Sphäre-Paarung gebildet ist, und bei der das trichterförmige Andockelement (6) in seiner Umfangswandung (13) wenigstens einen Hohlraum (10) aufweist, welcher durch eine Zugangsöffrtung (14) mit einem Druckmittel (16) beaufschlagbar ist, und die Sphäre (8) im Trichter (6) klemmend fixiert.

## Beschreibung

Die Erfindung bezieht sich auf eine Umfüll-Vorrichtung für fließfähige Medien, insbesondere für Gülle. Gülle fällt durch Tierhaltung in landwirtschaftlichen Betrieben an und wird später als Dünger auf landwirtschaftlichen Flächen - also auf Feldern - ausgebracht.

Bei großem Gülle-Aufkommen wird die Ausbringung der Gülle mehrstufig vorgenommen. Große Gülle-Transport-Fahrzeuge mit Tankvolumen von über 10 Kubikmetern werden im landwirtschaftlichen Betrieb mit Gülle befüllt und dienen als sogenannte Zubringer für die eigentlichen Gülle-Ausbring-Fahrzeuge, welche die Gülle auf den Feldern ausbringen.

Die Gülle-Ausbring-Fahrzeuge sind kleiner oder gleich, wie die Gülle-Zubring-Fahrzeuge, weil sie wegen ihres Einsatzes auf topografisch unebenen Feldern möglichst leicht und bodenschonend sein sollten. Das Ladevolumen wird also durch den praktisch vorgegebenen Geländeeinsatz bzw. die Geländeformation begrenzt.

In der Vergangenheit wurden die Gülle-Ausbring-Fahrzeuge im landwirtschaftlichen Betrieb mit Gülle gefüllt und fuhren sodann über im allgemeinen öffentliche Straßen zu den zu düngenden Feldern.

Dies machte bei größeren Güllemengen viele Fahrten notwendig, was aus betriebswirtschaftlichen, verkehrstechnischen und nicht zuletzt ökologischen Gründen mit großen Nachteilen verbunden war.

Abhilfe schaffte hier die Aufteilung des Gülle-Transportes in Zubring-Fahrten und die eigentlichen Ausbring-Fahrten. Diese Aufteilung in Zubring- und in Ausbring-Fahrten macht in der Nähe der Ausbringfläche (also in der Nähe des zu düngenden Feldes) eine Umfüllung der Gülle vom Zubring-Fahrzeug in das Ausbring-Fahrzeug erforderlich.

Bei besonders hohem Gülle-Aufkommen in landwirtschaftlichen Großbetrieben ist sogar eine weitere Unterteilung des Gülle-Transportes zweckmäßig. Vom Zubring-Fahrzeug wird die Gülle in einen Behälter zur Zwischenlagerung am Feldrand umgepumpt, wobei dann das Ausbring-Fahrzeug in einem seinem Fassungsvermögen angepassten Takt den Behälter zur Zwischenlagerung der Gülle anfährt und von diesem jeweils Gülle abpumpt.

Zum Umfüllen der Gülle haben sich sogenannte Vakuum-Verfahren bewährt, bei denen mit Hilfe von Unterdruck Gülle aus dem jeweiligen Vorratsbehälter abgesaugt wird.

Der Vorratsbehälter kann dabei der Gülletank im landwirtschaftlichen Betrieb, der Gülletank des Zubring-Fahrzeugs, der Behälter zur Zwischenlagerung oder jeder andere Gülletank sein, aus dem letztlich das Ausbring-Fahrzeug aufgefüllt wird.

Die Vakuum-Umfüllung erfordert allerdings weitestgehend gasdichte Verbindungsleitungen, was in der landwirtschaftlichen Technik Probleme aufwirft, da relativ große Leitungsquerschnitte gehandhabt werden müssen und relativ hohe Verschmutzung nicht zu vermeiden ist.

Da feste Leitungsverbindungen zwischen den genannten Umfüllstationen ausscheiden, denn sowohl Zubring- als auch Ausbring-Fahrzeuge müssen mobil sein, werden an die lösbaren Verbindungselemente der Leitungen hohe Ansprüche gestellt. Die Verbindungselemente müssen mechanisch stabil und verschmutzungsunempfindlich sein, sie müssen große Justiertoleranzen zueinander zulassen, aber dennoch gasdicht sein.

Beim Stand der Technik führten diese Forderungen zu miteinander verschraubten Leitungsverbindungen, was sowohl von Seiten der Hersteller als auch von Seiten der Nutzer unbefriedigend war. Diese Verbindungen waren teuer in der Herstellung und sehr umständlich in der Handhabung.

Fortschritte wurden in der Praxis durch sogenannte "fliegende" Andock-Verbindungen erzielt. Bei den fliegenden Andock-Verbindungen weist eines der Leitungsenden einen trichterförmigen Aufnahmestutzen auf und das andere Leitungsende, welches mit dem ersteren korrespondieren soll, weist einen sphärischen Ansatz auf, welcher in dem trichterförmigen Aufnahmestutzen aufgenommen wird.

Der trichterförmige Aufnahmestutzen befindet sich beispielsweise am Zubring-Fahrzeug am Ende der Gülle-Abgabeleitung.

Der sphärische Ansatz schließt beispielsweise die einspeisungsseitige Leitung des Ausbring-Fahrzeugs ab. Diese Leitung stellt einen Saugrüssel dar, der vom Gülle-Ausbring-Fahrzeug mit Unterdruck beaufschlagt wird.

Beim Andocken des Gülle-Ausbring-Fahrzeuges am Gülle-Zubring-Fahrzeug oder am Behälter zur Zwischenlagerung, jedenfalls beim Andocken zum Zwecke der Umfüllung wird der sphärische Ansatz des Saugrüssels in dem trichterförmigen Aufnahmestutzen aufgenommen und die Umfüllverbindung hergestellt.

Eine exakte Anpassung in axialer, radialer und winkelmäßiger Position von Aufnahmestutzen und sphärischem Ansatz ist wegen der üblichen Bodenunebenheiten nicht möglich. Daher war eine manuelle Justierung der an Federelementen und Hebeln aufgehängten und abgestützten Andock-Bauteile notwendig.

Sowohl der Andocktrichter als auch der sphärische Ansatz des Saugrüssels (Saugkugel) mussten luftdicht mit ihren zugehörigen Rohrleitungsabschnitten verbunden werden. Für die federbelasteten Montageelemente ist der Aufwand sowohl in konstruktiver als auch in baulicher Hinsicht sehr aufwändig, wobei deren dauerhaft störungsfreier Betrieb unter den erschwerten Bedingungen der Landwirtschaft nicht immer ohne weiteres gewährleistet war.

Eine Umfüllung von Gülle aus Hochbehältern war gemäß dem Stand der Technik nicht möglich, wenn keine Saugverbindung mittels Vakuum stattfinden konnte oder sollte. Die an sich bewährte Verbindung von Gummitrichter und Saugrüssel-Sphäre kann nicht verwendet werden, wenn aufgrund des hydrostatischen Drucks innerhalb eines Güllesilos auf die Verbindung Trichter/Sphäre Druck ausgeübt wird, da diese bewährten Andockelemente dann aufgrund des Drucks getrennt würden.

Aufgabe der vorliegenden Erfindung ist es daher, eine Umfüll-Vorrichtung für fließfähige Medien, insbesondere für Gülle zu schaffen, die diesen Nachteil nicht aufweist, die einfach herstellbar, leicht zu handhaben und robust ist; die einen weitestgehend störungsfreien Betrieb ermöglicht und im eventuellen Störungsfall dennoch leicht austauschbar ist.

Diese Aufgabe wird von einer Umfüll-Vorrichtung mit den Merkmalen des Anspruches 1 gelöst, wobei die Vorrichtung mit den Merkmalen der Unteransprüche in vorteilhafter Weise ausgestaltet wird.

Die Vorteile der Erfindung liegen darin, dass die Umfüll-Vorrichtung lediglich zwei jeweils bevorzugt einstückige Andockelemente aufweist, wodurch sie einfach und kostengünstig herstellbar ist. Ihr Betrieb ist einfach, weil eine manuelle gegenseitige Justage unnötig ist und die Abdichtungsfunktion durch die Selbstjustierung automatisch erfüllt wird. Ferner ist sie universell bei Umfüllvorgängen einsetzbar, unabhängig davon, ob mit Unterdruck oder mit Überdruck gearbeitet wird.

Eine Umfüll-Vorrichtung zum Umfüllen von fließfähigen Medien zwischen zwei Behältern, insbesondere von Gülle ist dann besonders vorteilhaft gestaltet, wenn die Behälter durch Leitungen miteinander verbindbar sind und die Verbindung durch Andockelemente erfolgt, und wenn die Andockelemente aus mehreren Elementen bestehen, von denen eines trichterförmig ausgebildet und zur Erzielung einer gasdichten Verbindung zwischen den Andockelementen aus gummielastischem Werkstoff geformt ist, wenn das jeweils andere Andockelement diesem trichterförmigen Andockelement nach Art einer Konus/Sphäre-Verbindung angepasst ist, und wenn das trichterförmige Andockelement in seiner Umfangswandung wenigstens einen Hohlraum aufweist, welcher durch wenigstens eine Zugangsöffnung mit einem Druckmittel beaufschlagbar ist.

Eine Umfüll-Vorrichtung ist besonders günstig gestaltet, wenn das trichterförmige Andockelemente in seiner Umfangswandung einen ringförmigen Hohlraum aufweist, welcher durch eine Zugangsöffnung mit einem Druckmittel beaufschlagbar ist.

Eine Umfüll-Vorrichtung ist auch dann vorteilhaft, wenn das trichterförmige Andockelement in seiner Umfangswandung mehrere Hohlräume aufweist, welche durch Zugangsöffnungen mit einem Druckmittel beaufschlagbar ist.

Besonders günstig ist es bei einer Umfüll-Vorrichtung, wenn der Hohlraum in der Umfangswandung durch das Druckmittel in Richtung der Sphäre aufweitbar ist, insbesondere dann, wenn der aufgeweitete Hohlraum in der Umfangswandung die Sphäre oberhalb ihres Großkreises zumindest teilweise umschließt, noch besser jedoch, wenn der aufgeweitete Hohlraum in der Umfangswandung die Sphäre oberhalb ihres Großkreises ringförmig umschließt.

Besonders betriebssicher wird eine Umfüll-Vorrichtung dadurch, dass der aufgeweitete Hohlraum die Sphäre oberhalb ihres Großkreises umschließt und deren Klemmung in dem trichterförmigen Andockelement bewirkt.

Darüber hinaus kann eine Umfüll-Vorrichtung vorteilhaft gestaltet sein, wenn zumindest eines der vorgenannten Andockelemente axial-, radial- und /oder winkelbeweglich ist, wobei die axial-, radial und /oder winkelbewegliche Befestigung des jeweiligen Andockelementes an seinem zugehörigen Leitungsende mittels eines Balges erfolgt, und wenn der Balg einstückig mit dem zugehörigen Andockelement verbunden ist.

Mit Hilfe der Zeichnungen wird nachstehend die Erfindung anhand von Ausführungsbeispielen noch näher erläutert.

Es zeigt
Figur 1 eine Umfüllstation schematisch dargestellt;
Figur 2 zwei Andockelemente in Kegel/Sphäre Paarung bei Vakuum-Andockung;
Figur 3 zwei Andockelemente in Kegel/Sphäre Paarung bei Überdruck-Andockung;
Figur 4 ein Gülle-Transportfahrzeug im Andockzustand und
Figur 5 ein Gülle-Transportfahrzeug im Abdockzustand.

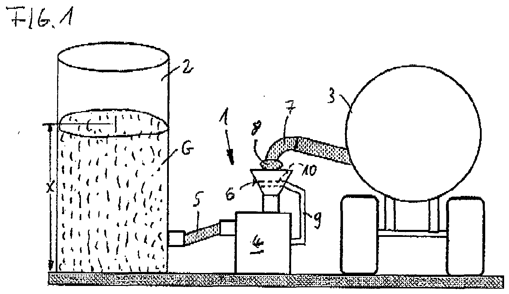

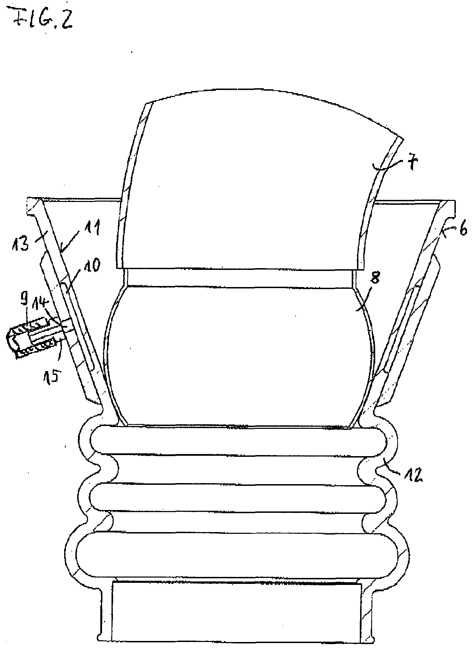

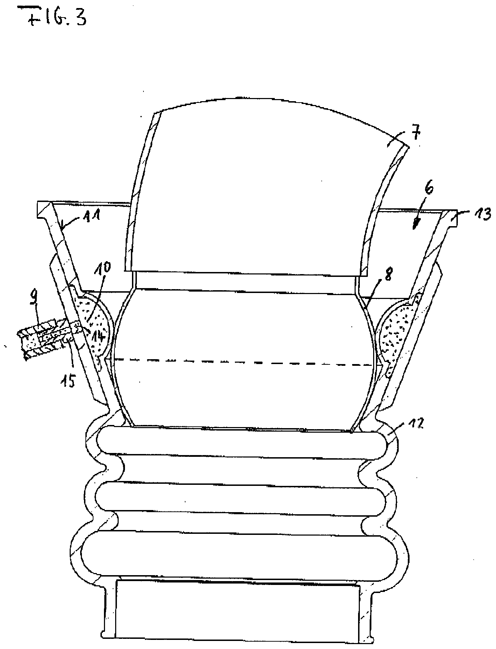

In Figur 1 ist eine Umfüllstation 1 mit einem Vorratsbehälter 2 für Gülle G und einem Transportanhänger 3 für den Gülletransport schematisch dargestellt. Die Umfüllung der Gülle G erfolgt mittels einer Andockstation 4. Der Vorratsbehälter 2 enthält Gülle G mit einer Höhe X, was einen hydrostatischen Druck hervorruft. Die Andockstation 4 enthält in bekannter Weise eine nicht näher bezeichnete Pumpe, mit der die Gülle G über die Andockstation 4 in den Transportanhänger 3 gepumpt wird. Zwischen dem Vorratsbehälter 2 und der Andockstation 4 besteht eine Leitungsverbindung 5, durch die Gülle G fließen kann. Ausgangsseitig weist die Andockstation 4 ein Andockelement 6 in Form eines Trichters auf. Der Transportanhänger 3 weist einen Saugrüssel 7 auf, der an seinem freien Ende ein sphärisch geformtes Andockelement 8 trägt. Die Andockstation 4 verfügt über eine Druckleitung 9, die mit dem trichterförmigen Andockelement 6 verbunden ist. In der Andockstation 4 befindet sich ein nicht dargestellter Kompressor, der mittels der Druckleitung 9 dem trichterförmigen Andockelement 6 Druckmittel zuführt. Mit Hilfe des Druckmittels wird im trichterförmigen Andockelement 6 ein Hohlraum 10 aufgeweitet, der im Falle einer Druckbetankung das sphärische Andockelemente 8 in dem trichterförmigen Andockelement 6 fixiert. Im hier erläuterten Ausführungsbeispiel ist der besseren Anschaulichkeit halber das sphärische Andockelement 8 außerhalb des trichterförmigen Andockelements 6 gezeigt, bei der Umfüllung befindet es sich jedoch innerhalb des trichterförmigen Andockelements 6, was in den Figuren 2 und 3 noch näher erläutert werden wird.

In Figur 2 werden in einer vergrößerten Ansicht zwei Andockelemente dargestellt, und zwar das trichterförmige Andockelement 6 und das sphärische Andockelement 8, welches sich am freien Ende des Saugrüssels 7 befindet. Das sphärische Andockelement 8 bildet mit einem Innenkegel 11 des trichterförmigen Andockelements 6 eine gasdichte Verbindung nach Art einer Kegel/Sphäre Paarung. Das trichterförmige Andockelement 6 besteht aus gummielastischem Werkstoff und ist mit Hilfe eines balgartigen Anschlußflanschs 12 an einer nicht dargestellten Andockstation befestigt. Der balgartige Anschlußflansch 12 ermöglicht zumindest einem der vorgenannten Andockelemente - hier dem trichterförmigen Andockelement 6 - axiale-, radiale- und /oder winkelbewegliche Auslenkungen, wobei die axiale-, radiale und /oder winkelbewegliche Befestigung des jeweiligen Andockelementes 6 an seinem zugehörigen Leitungsende (nicht dargestellt) mittels eines balgartigen Anschlußflanschs 12 erfolgt, wobei der Anschlußflansch 12 einstückig mit dem zugehörigen Andockelement 6 verbunden. Als Besonderheit weist das trichterförmige Andockelement 6 in seiner Umfangswandung 13 den bereits erwähnten Hohlraum 10 auf. In den Hohlraum 10 mündet eine Zugangsöffnung 14 mit einem Anschluss-Stutzen 15, an welchem die Druckleitung 9 angeschlossen ist, über die der Hohlraum 10 mit einem Druckmittel beaufschlagt werden kann.

In Figur 3 findet sich eine ähnliche Darstellung zweier Andockelemente 6 und 8 wie in Figur 2. Allerdings ist eine wesentliche Änderung dahingehend dargestellt, dass der Hohlraum 10 von einem Druckmittel 16 derart aufgeweitet ist, dass es oberhalb des Grosskreises 17 der Sphäre 8 zu einer fixierenden Klemmung der sphärischen Andockelements 8 im trichterförmigen Andockelement 6 kommt. Das Druckmittel 16 wird vorzugsweise von bordeigenen Vorrichtungen erzeugt und kann Druckluft, HydraulikFlüssigkeit oder ein beliebiges anderes geeignetes Fluid sein.

Im dargestellten Ausführungsbeispiel ist ein umlaufender Hohlraum 10 in der Umfangswandung 13 des trichterförmigen Andockelements 6 realisiert, aber für die Erzeugung einer fixierenden Klemmung des sphärischen Andockelements 8 in dem trichterförmigen Andockelement 6 reicht auch eine Anordnung von beispielsweise drei Hohlräumen aus, die annähernd gleichmäßig über den Umfang verteilt, in der Umfangswandung des trichterförmigen Andockelements 6 angeordnet sind, um im aufgeweiteten Zustand die Sphäre 8 im Kegel 11 zu halten. Wenn der Umfüllvorgang mit Überdruck erfolgt, wird durch die erfindungsgemäße Anordnung sicher verhindert, dass das sphärische Andockelement 8 aus dem trichterförmigen Andockelement 6 herausgedrückt wird.

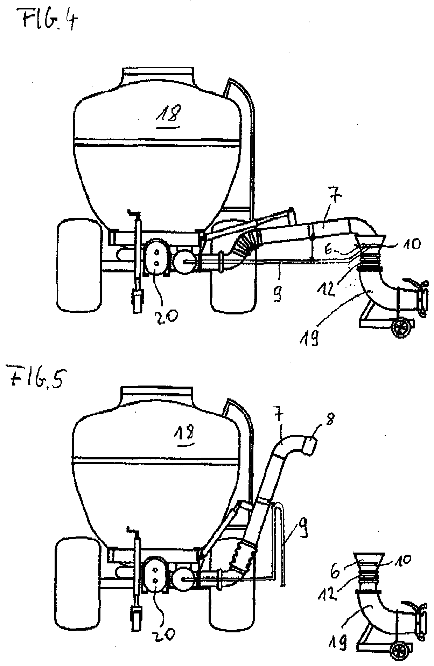

Figur 4 zeigt ein Gülle-Transportfahrzeug 18 im Andockzustand mit einer mobilen Andockstation 19. Das Gülle-Transportfahrzeug 18 verfügt über eine Pumpe 20, die als Vakuumpumpe ausgebildet ist und Unterdruck für eine sogenannte Vakuum-Förderung erzeugt, oder es handelt sich um eine Förderpumpe, welche die Gülle aus einem Vorratsbehälter direkt fördert. In diesem kann sie als Kreiselpumpe oder ähnliches ausgestaltet sein. Der Saugrüssel 7 ist mit seinem sphärischen Andockelemente 8 im trichterförmigen Andockelement 6 versenkt und bereit zur Umfüllung. Die Pumpe 20 liefert über den Gülletransport hinaus den Überdruck für das nicht dargestellte Druckmittel. Die Druckleitung 9 verlauft von der Pumpe 20 zum Hohlraum 10 im trichterförmigen Andockelement 6. Sie ist beweglich an dem Saugrüssel 7 befestigt und kann so der Bewegung des Saugrüssels 7 folgen. Die Verbindung von der mobilen Andockstation 19 zu einem nicht dargestellten Vorratsbehälter ist offen dargestellt, da hier nur angedeutet werden soll, dass der erfindungsgemäße Gegenstand bei jeder Art von Umfüllvorgängen zur Anwendung gelangen kann.

In Figur 5 ist die gleiche Umfüllstation veranschaulicht, aber der Saugrüssel 7 ist aus dem trichterförmigen Andockelement 6 herausgehoben, der Umfüllvorgang kann also als noch nicht begonnen oder bereits beendet betrachtet werden. Die Druckleitung 9 ist vom Hohlraum 10 getrennt und durch die bewegliche Aufhängung am Saugrüssel 7 hängt sie frei in der Luft.

### Bezugszeichenliste

- 1: Umfüllstation
- 2: Vorratsbehälter
- 3: Transportanhänger
- 4: Andockstation
- 5: Leitungsverbindung
- 6: trichterförmiges Andockelement (Trichter)
- 7: Saugrüssel
- 8: sphärisches Andockelement (Sphäre)
- 9: Druckleitung
- 10: Hohlraum
- 11: Innenkegel
- 12: Anschlußflansch
- 13: Umfangswandung
- 14: Zugangsöffnung
- 15: Anschluss-Stutzen
- 16: Druckmittel
- 17: Grosskreis
- 18: Gülle-Transportfahrzeug
- 19: Mobile Andockstation
- 20: Pumpe

## Patentansprüche

1. Umfüll-Vorrichtung zum Umfüllen von fließfähigen Medien zwischen zwei Behältern, insbesondere von Gülle, wobei die Behälter durch Leitungen miteinander verbindbar sind und die Verbindung durch Andockelement erfolgt, bei der die Andockelemente aus mehreren Elementen bestehen, von denen eines trichterförmig ausgebildet und zur Erzielung einer gasdichten Verbindung zwischen den Andockelementen aus gummielastischem Werkstoff geformt ist, und das jeweils andere Andockelement diesem trichterförmigen Andockelement nach Art einer Sphäre angepasst ist, so dass eine Innenkegel/Sphäre-Paarung gebildet ist, **dadurch gekennzeichnet, dass** das trichterförmige Andockelement (6) in seiner Umfangswandung (13) wenigstens einen Hohlraum (10) aufweist, welcher durch eine Zugangsöffnung (14) mit einem Druckmittel (16) beaufschlagbar ist.

2. Umfüll-Vorrichtung nach Anspruch 1, **dadurch gekennzeichnet, dass** das trichterförmige Andockelemente (6) in seiner Umfangswandung (13) einen ringförmigen Hohlraum (10) aufweist, welcher durch eine Zugangsöffnung (14) mit einem Druckmittel (16) beaufschlagbar ist.

3. Umfüll-Vorrichtung nach Anspruch 1, **dadurch gekennzeichnet, dass** das trichterförmige Andockelement (6) in seiner Umfangswandung (13) mehrere Hohlräume (10) aufweist, welche durch Zugangsöffnungen (14) mit einem Druckmittel (16) beaufschlagbar ist..

4. Umfüll-Vorrichtung nach einem der vorstehenden Ansprüche, **dadurch gekennzeichnet, dass** der Hohlraum (10) in der Umfangswandung (13) des trichterförmigen Andockelements (6) durch das Druckmittel (16) in Richtung des Innenkegels (11) des trichterförmigen Andockelements (6) aufweitbar ist.

5. Umfüll-Vorrichtung nach Anspruch 4, **dadurch gekennzeichnet, dass** der aufgeweitete Hohlraum (10) in der Umfangswandung (13) die Sphäre des sphärischen Andockelements (8) oberhalb ihres Großkreises (17) zumindest teilweise umschließt.

6. Umfüll-Vorrichtung nach Anspruch 4, **dadurch gekennzeichnet, dass** der aufgeweitete Hohlraum (10) in der Umfangswandung (13) die Sphäre (8) oberhalb ihres Großkreises (17) ringförmig umschließt.

7. Umfüll-Vorrichtung nach einem der vorstehenden Ansprüche, **dadurch gekennzeichnet, dass** der aufgeweitete Hohlraum (10) die Sphäre (8) oberhalb ihres Großkreises (17) umschließt und deren Klemmung in dem trichterförmigen Andockelement (6) bewirkt.

8. Umfüll-Vorrichtung nach Anspruch 1, **dadurch gekennzeichnet, dass** das Druckmittel (16) ein Fluid ist.

9. Umfüll-Vorrichtung nach Anspruch 8, **dadurch gekennzeichnet, dass** das Fluid (16) flüssig oder gasförmig ist.

10. Umfüll-Vorrichtung nach Anspruch 1, **dadurch gekennzeichnet, dass** zumindest eines der vorgenannten Andockelemente (6, 8) axial-, radial- und /oder winkelbeweglich ist, wobei die axial-, radial und /oder winkelbewegliche Befestigung des jeweiligen Andockelementes (6, 8) an seinem zugehörigen Leitungsende (7) mittels eines Balges (12) erfolgt, dass der Balg (12) einstückig mit dem zugehörigen Andockelement (6) verbunden ist.
